# FASCICULE DE BREVET EUROPEEN

(11) **EP 1 486 118 B1**
(45) Date de publication et mention de la délivrance du brevet: **03.02.2010**
(21) Numéro de dépôt: 04300317.7
(22) Date de dépôt: 08.06.2004
(51) Int. Cl.: A01M 7/00

(54) **Dispositif de guidage pour une rampe de pulvérisateur agricole**
Führungsvorrichtung für ein Spritzgestänge einer landwirtschaftlichen Feldspritze
Guidance device for a spray-boom mounted on an agricultural fieldsprayer

(30) Priorité: 11.06.2003 FR 0307030
(43) Date de publication de la demande: 15.12.2004
(73) Titulaire: KUHN S.A., 67700 Saverne (FR)
(72) Inventeur: Roger, Fabien, 77130 Montereau (FR); Vuillin, Michel, 77250 Veneux-les-Sablons (FR)
(74) Mandataire: Andres, Jean-Claude

(56) Documents cités:
- FR-A- 2 423 127
- FR-A- 2 520 586
- US-A- 2 699 967
- US-A- 4 982 898

## Description

La présente invention se rapporte au domaine technique général du machinisme agricole. Elle concerne plus précisément un pulvérisateur agricole comportant :
- un châssis,
- une cuve destinée à contenir un produit à pulvériser,
- une rampe destinée à supporter des moyens de pulvérisation pour épandre le produit contenu dans ladite cuve, et
- un dispositif de guidage destiné à lier de manière coulissante ladite rampe audit châssis ou à ladite cuve, ledit dispositif de guidage comportant un guide et des éléments de contact, lesdits éléments de contact prennent appui sur ledit guide de manière à guider ladite rampe dans son mouvement de translation vertical.

Un tel pulvérisateur agricole est connu de l'homme du métier, notamment par le document FR-A-2 520 586**.** Ce document antérieur décrit en effet un pulvérisateur agricole comportant d'une manière générale un châssis et une rampe. Le châssis supporte une cuve pour liquide de traitement et il repose au sol au moyen de roues. Pour sa part la rampe comporte deux bras qui s'étendent lors du travail transversalement à une direction d'avance du pulvérisateur. Les bras supportent des moyens de pulvérisation destinés à épandre le liquide de traitement contenu dans la cuve.

Sur ce pulvérisateur connu, la rampe est liée au châssis de manière coulissante suivant une direction verticale. La hauteur de la rampe par rapport au sol peut ainsi être modifiée à souhait par l'utilisateur. A cet effet, deux montants verticaux sont soudés à la partie arrière du châssis. Pour sa part, la rampe comporte deux éléments de contact ayant une forme complémentaire aux montants. Chaque élément de contact peut ainsi coulisser le long d'un montant correspondant.

Une telle conception d'un dispositif de guidage comporte cependant un inconvénient majeur. Les dimensions des montants et leur position par rapport au châssis sont inévitablement tributaires des tolérances de fabrication. Il en va de même pour les dimensions des éléments de contact et leur position par rapport à la rampe. Pour que le coulissement de la rampe par rapport au châssis puisse se faire sans efforts excessifs, il faut donc prévoir dés la conception un jeu conséquent entre l'élément de contact et le montant correspondant de manière à compenser toutes ces tolérances de fabrication. Ce jeu important réduit considérablement la précision du guidage. Une diminution du jeu est certes possible mais elle implique une fabrication très soignée de l'élément de contact et du montant correspondant, d'où une augmentation exorbitante du coût de fabrication.

Le document FR 2 423 127 se rapporte à un dispositif de suspension entre la rampe et le châssis d'un pulvérisateur. La rampe comporte des éléments de contact permettant un guidage transversal de la rampe. Ce guidage transversal de la rampe en combinaison avec des leviers, un bras télescopique et un dispositif de levage à chaînes réalise le dispositif de suspension.

Le but de la présente invention est d'obtenir un pulvérisateur agricole dont le guidage par coulissement de la rampe est réalisé sans jeu tout en étant peu onéreux à réaliser.

A cet effet, le pulvérisateur agricole selon la présente invention est caractérisé par le fait que :
- au moins un desdits éléments de contact est un élément de contact fixe lié à ladite rampe de manière à avoir une position fixe par rapport à ladite rampe permettant de guider avec précision ladite rampe dans son mouvement de translation, au moins un élément de contact fixe est disposé dans une partie supérieure de ladite rampe et au moins un élément de contact fixe est disposé dans une partie inférieure de ladite rampe, et
- au moins un desdits éléments de contact est un élément de contact mobile lié à ladite rampe de manière à occuper une position variable par rapport à ladite rampe permettant de compenser les différentes tolérances de fabrication dudit guide, au moins un élément de contact mobile est disposé dans une partie supérieure de ladite rampe et au moins un élément de contact mobile est disposé dans une partie inférieure de ladite rampe.

Ainsi ledit au moins un élément de contact fixe permet de guider avec précision ladite rampe dans son mouvement de translation. Ledit au moins un élément de contact mobile permet pour sa part de compenser les différentes tolérances de fabrication de manière à ne pas avoir de jeu dans le guidage.

D'autres caractéristiques de l'invention, à considérer séparément ou dans toutes leurs combinaisons possibles, apparaîtront encore dans la description suivante d'exemples de réalisation non limitatifs de l'invention représentés sur les dessins annexés sur lesquels :
- la **figure 1** représente vu de dessus un pulvérisateur agricole conforme à la présente invention,
- la **figure 2** représente une vue de côté du pulvérisateur suivant la flèche II définie à la figure 1,
- la **figure 3** représente vu de dessus et à une autre échelle un premier exemple de réalisation d'un dispositif de guidage conforme à la présente invention,
- la **figure 4** représente une vue de derrière du premier exemple de réalisation suivant la flèche IV définie à la figure 3,
- la **figure 5** représente, vu de dessus et à une autre échelle, un deuxième exemple de réalisation d'un dispositif de guidage conforme à la présente invention,
- la **figure 6** représente une vue isométrique du deuxième exemple de réalisation,
- la **figure 7** représente une vue de côté du deuxième exemple de réalisation suivant la flèche VII définie à la figure 5.

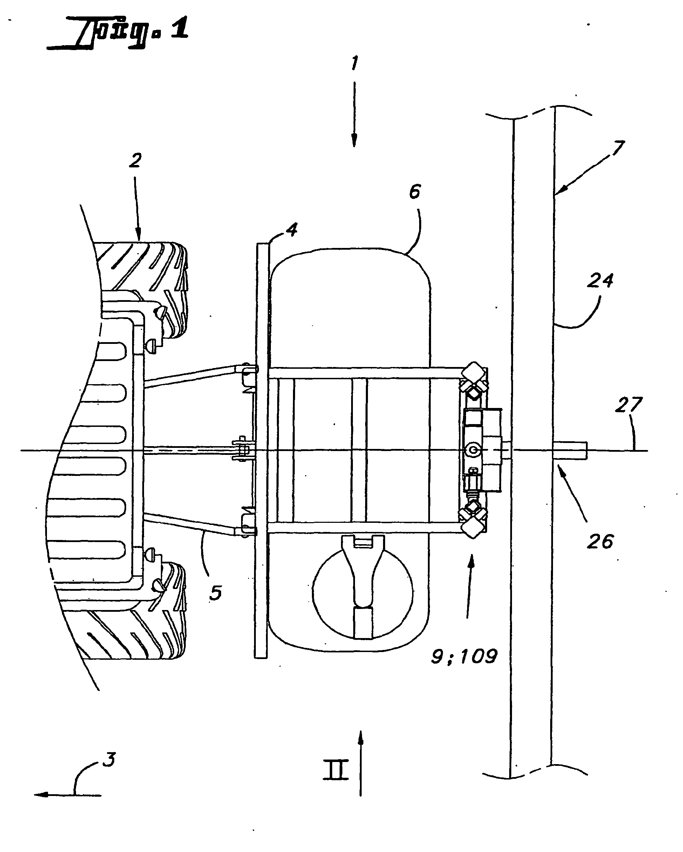

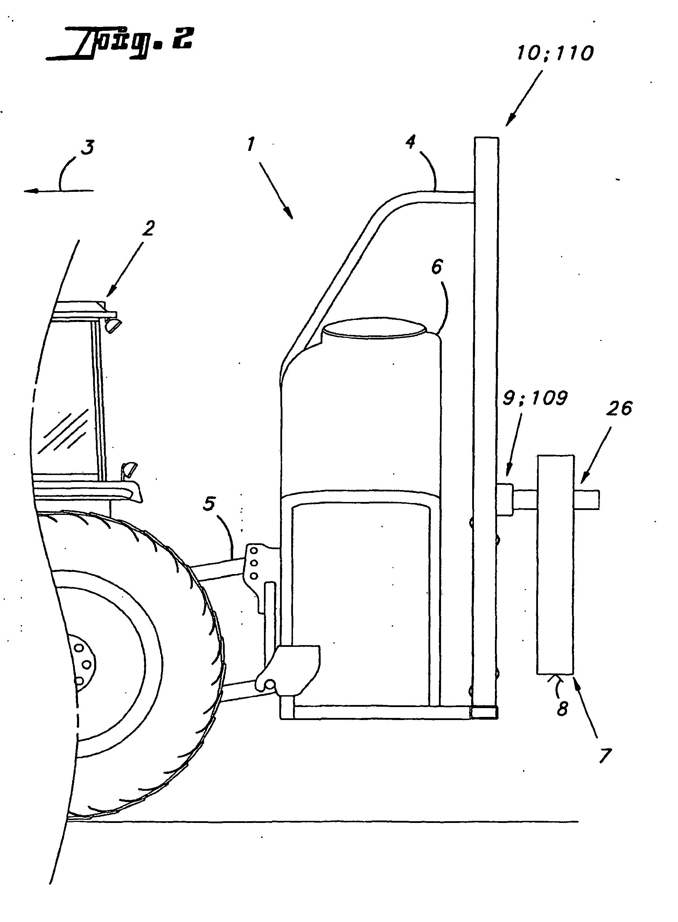

Les figures 1 et 2 représentent un pulvérisateur agricole (1) conforme à la présente invention. Ledit pulvérisateur (1) est attelé à un véhicule moteur (2) qui le déplace suivant une direction et un sens d'avance indiqués par la flèche (3). Dans la suite de la description, les notions suivantes "avant" et "arrière", "devant" et "derrière" sont définies par rapport au sens d'avance (3) et les notions "droite" et "gauche" sont définies en regardant ledit pulvérisateur (1) de l'arrière dans le sens d'avance (3).

D'une manière connue en soi, ledit pulvérisateur agricole (1) comporte un châssis (4) destiné à être attelé audit véhicule moteur (2). Dans l'exemple de réalisation représenté sur les figures 1 et 2, ledit pulvérisateur (1) est du type porté. L'intégralité du poids dudit pulvérisateur (1) est donc supporté par ledit véhicule moteur (2). Pour ce faire, ledit châssis (4) est réalisé de manière à être lié à un attelage trois points (5) dudit véhicule moteur (2).

Ledit pulvérisateur (1) comporte également une cuve (6) destinée à contenir un liquide de traitement. A la lumière des figures 1 et 2, ladite cuve (6) est supportée par ledit châssis (4).

Ledit pulvérisateur (1) comporte en sus une rampe (7) destinée à supporter des moyens de pulvérisation (8), par exemple des buses. Lors du travail tel que représenté sur les figures 1 et 2, ladite rampe (7) s'étend transversalement à ladite direction d'avance (3) et parallèlement au sol. Ainsi à chaque passage, ledit pulvérisateur (1) peut traiter une bande de terrain pouvant atteindre plusieurs dizaines de mètres de large. Lors du transport, ladite rampe (7) est repliée sur elle-même de manière à respecter le gabarit autorisé pour circuler sur la voie publique.

D'une manière connue par l'homme de l'art, ledit pulvérisateur (1) comporte encore des moyens pour pomper le liquide de traitement contenu dans ladite cuve (6) et pour l'envoyer sous pression jusqu'auxdits moyens de pulvérisation (8). Ledit liquide de traitement est ainsi déposé en fines gouttelettes sur les plantes ou le sol à traiter. Ces moyens de pompage se composent notamment d'une pompe, de conduites, de vannes, .... De tels moyens étant largement connus, ils n'ont pas été représentés sur les figures et ils ne seront pas décrits davantage.

A la lumière des figures 1 et 2, ladite rampe (7) est liée de manière coulissante audit châssis (4) au moyen d'un dispositif de guidage (9 ; 109). Ledit dispositif de guidage (9 ; 109) permet avantageusement un coulissement sensiblement vertical de ladite rampe (7) par rapport audit châssis (4). L'utilisateur dudit pulvérisateur (1) peut ainsi adapter la hauteur de pulvérisation de ladite rampe (7) notamment à la taille des plantes à traiter.

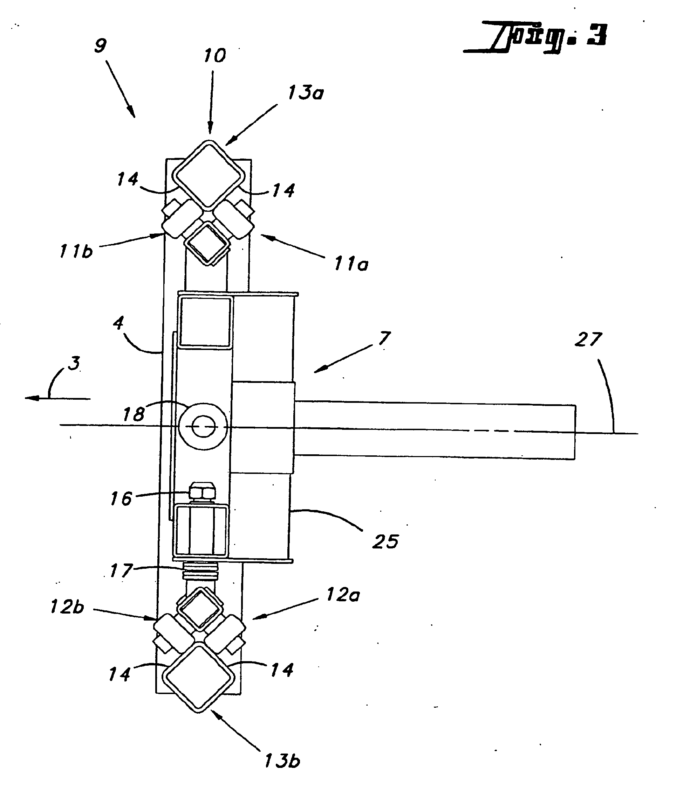

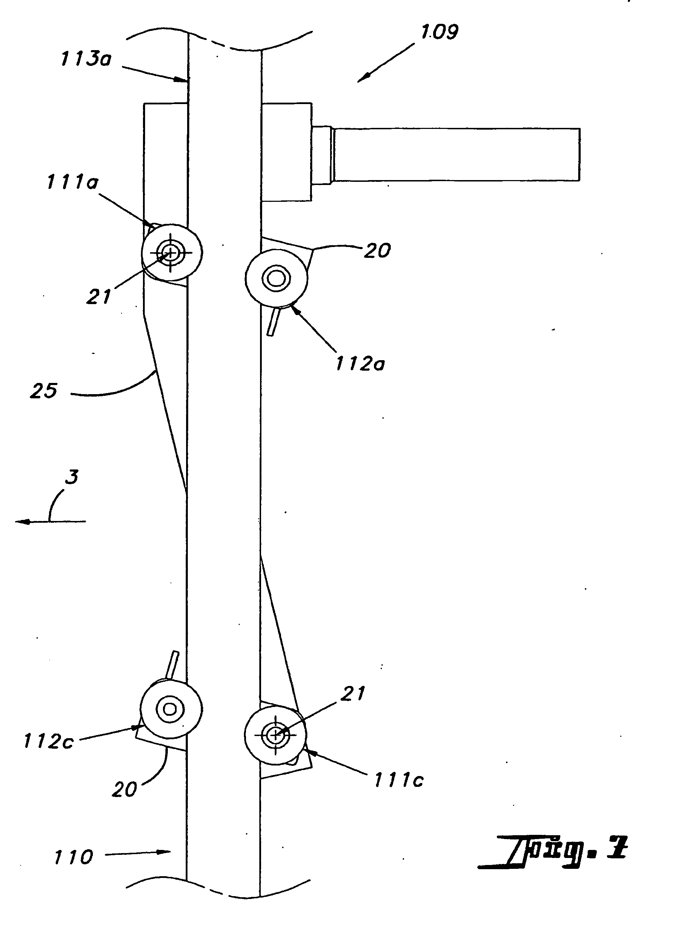

Dans les exemples de réalisation représentés plus précisément aux figures 3 à 7, ledit dispositif de guidage (9 ; 109) comporte un guide (10 ; 110) lié rigidement audit châssis (4) et des éléments de contact (11, 12 ; 111, 112) liés à ladite rampe (7). Lesdits éléments de contact (11, 12 ; 111, 112) prennent appui sur ledit guide (10 ; 110) de manière à guider ladite rampe (7) dans son mouvement de translation.

Selon une caractéristique importante de la présente invention :
- au moins un desdits éléments de contact (11, 12 ; 111, 112) est un élément de contact fixe (11 ; 111) lié à ladite rampe (7) de manière à avoir une position fixe par rapport à ladite rampe (7), et
- au moins un desdits éléments de contact (11, 12 ; 111, 112) est un élément de contact mobile (12 ; 112) lié à ladite rampe (7) de manière à occuper une position variable par rapport à ladite rampe (7).

Dans le premier exemple de réalisation représenté sur les figures 1 à 4, ledit guide (10) se compose de deux montants (13a, 13b) sensiblement verticaux. Lesdits montants (13a, 13b) sont disposés à l'arrière dudit châssis (4) et symétriquement de part et d'autre d'un plan vertical médian (27) dudit pulvérisateur (1). Lesdits montants (13a, 13b) sont en sus au moins sensiblement parallèles l'un à l'autre. A la lumière de la figure 2, lesdits montants (13a, 13b) sont liés dans leur partie basse et dans leur partie haute audit châssis (4) de manière à mieux supporter les efforts qu'ils subissent. La liaison entre le châssis (4) et lesdits montants (13a, 13b) est réalisée par soudure ou par tout moyen de fixation équivalent.

La section de chaque montant (13a, 13b) présente avantageusement au moins une surface permettant à l'un au moins desdits éléments de contact (11, 12) d'y prendre appui. Ainsi dans l'exemple de réalisation représenté plus en détails à la figure 3, chaque montant (13a, 13b) présente deux faces sensiblement planes (14) lesquelles sont avantageusement orientées obliquement par rapport audit plan vertical médian (27) dudit pulvérisateur (1). Lesdits montants (13a, 13b) ont plus précisément une section carrée laquelle est orientée de manière à ce que l'une de ses diagonales soit sensiblement parallèle audit plan vertical médian (27). Lesdites faces planes (14) sont alors de préférence celles orientées vers ledit plan vertical médian (27).

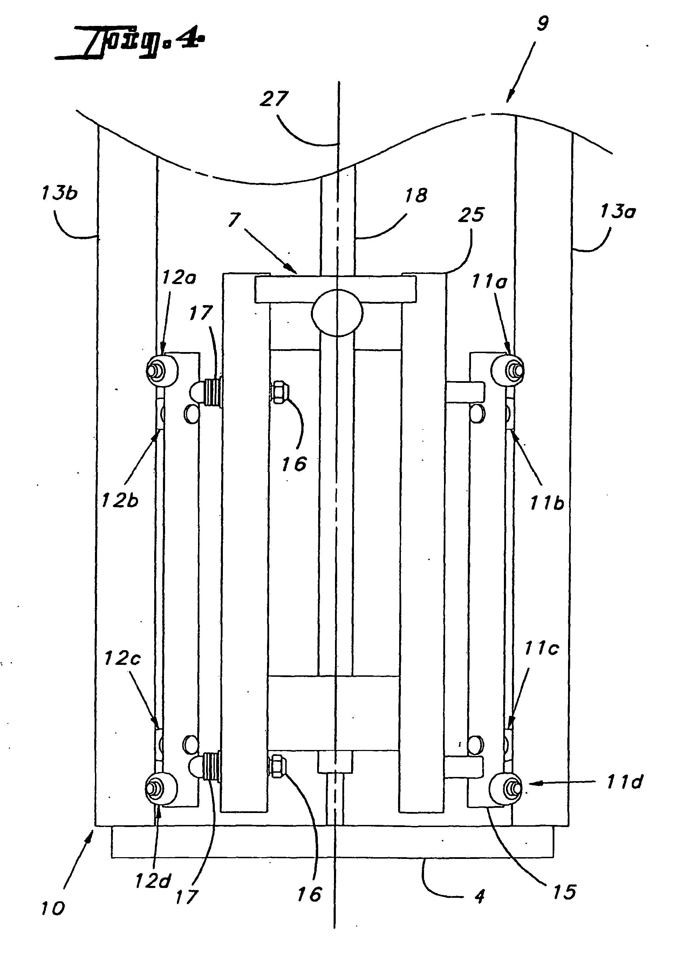

Dans le premier exemple de réalisation représenté sur les figures 1 à 4, lesdits éléments de contact (11, 12) sont avantageusement des éléments de contact de type roulant. A la lumière plus précisément des figures 3 et 4, lesdits éléments de contacts (11, 12) sont réalisés au moyen de galets cylindriques liés de manière pivotante à ladite rampe (7). Le guidage de ladite rampe (7) se fait ainsi avantageusement par des contacts roulants et non pas par des contacts glissants. Le déplacement de ladite rampe (7) le long dudit guide (10) engendre donc très peu de frottements, d'où un coulissement demandant peu d'effort. D'une manière préférentielle, la surface de contact desdits galets est légèrement bombée.

En se référant aux figures 3 et 4, ledit dispositif de guidage (9) comporte avantageusement quatre éléments de contact fixes (11a, 11b, 11c, 11d). Lesdits éléments de contact fixes (11a, 11b, 11c, 11d) sont disposés, par rapport audit plan vertical médian (27), sur un même côté dudit dispositif de guidage (9) de manière à s'appuyer sur un même montant (13a).

Deux desdits éléments de contact fixes (11a, 11b) sont disposés dans une partie supérieure de ladite rampe (7) de manière à s'appuyer chacun sur une face plane respective (14) dudit montant (13a). De préférence, les axes de rotation respectifs desdits deux éléments de contact fixes (11a, 11b) sont proches l'un de l'autre voir même concourants.

Les deux autres éléments de contact fixes (11c,11d) sont disposés cette fois dans une partie inférieure de ladite rampe (7) de manière à s'appuyer également sur une face plane respective (14) dudit montant (13a). Les axes de rotation respectifs desdits deux éléments de contact fixes (11c, 11d) sont avantageusement proches l'un de l'autre voir même concourants.

D'une manière préférentielle, l'axe de rotation de chaque élément de contact fixe (11a, 11b, 11c, 11d) est orienté sensiblement horizontalement et sensiblement parallèlement à ladite face plane (14) sur laquelle il s'appuie. En augmentant la distance séparant les deux éléments de contact fixes (11a, 11b) de la partie supérieure et les deux éléments de contact fixes (11c, 11d) de la partie inférieure, on améliore avantageusement le guidage de ladite rampe (7).

Lesdits éléments de contact fixes (11a, 11b, 11c, 11d) sont liés à ladite rampe (7) de manière à ce que leur axe de rotation respectif soit fixe par rapport à ladite rampe (7) et de manière à ce que la position desdits éléments de contact fixes (11a, 11b, 11c, 11d) le long dudit axe de rotation respectif soit également fixe par rapport à ladite rampe (7). Le seul mouvement desdits éléments de contact fixes (11a, 11b, 11c, 11d) par rapport à ladite rampe (7) est donc la rotation possible autour de leur axe de rotation respectif. Les points de contact desdits éléments de contact fixes (11a, 11b, 11c, 11d) sur ledit montant correspondant (13a) définissent ainsi un appui de référence pour ladite rampe (7).

Dans le premier exemple de réalisation représenté sur les figures 1 à 4, ledit dispositif de guidage (9) comporte en sus quatre éléments de contact mobiles (12a, 12b, 12c, 12d). Lesdits éléments de contact mobiles (12a, 12b, 12c, 12d) sont avantageusement disposés, par rapport audit plan vertical médian (27), sur un même côté dudit dispositif de guidage (9) mais pas sur le côté où sont déjà disposés lesdits éléments de contact fixes (11). Lesdits éléments de contact mobiles (12a, 12b, 12c, 12d) sont ainsi en appui sur l'autre montant (13b).

Deux desdits éléments de contact mobiles (12a, 12b) sont disposés dans une partie supérieure de ladite rampe (7) en appui chacun sur une face plane respective (14). D'une manière préférentielle, les axes de rotation respectifs desdits deux éléments de contact mobiles (12a, 12b) sont proches l'un de l'autre voire même concourants.

Les deux autres éléments de contact mobiles (12c, 12d) sont disposés cette fois dans une partie inférieure de ladite rampe (7) en appui chacun sur une face plane respective (14). Les axes de rotation respectifs desdits deux éléments de contact mobiles (12c, 12d) sont avantageusement proches l'un de l'autre voire même concourants.

D'une manière préférentielle, l'axe de rotation de chaque élément de contact mobile (12a, 12b, 12c, 12d) est orienté sensiblement horizontalement et sensiblement parallèlement à ladite face plane (14) sur laquelle il s'appuie. En augmentant la distance séparant les deux éléments de contact mobiles (12a, 12b) de la partie supérieure et les deux éléments de contact mobiles (12c, 12d) de la partie inférieure, on améliore encore le guidage de ladite rampe (7).

Lesdits éléments de contact mobiles (12a, 12b, 12c, 12d) sont liés à ladite rampe (7) de manière à ce que leur emplacement respectif soit mobile par rapport à ladite rampe (7). A cet effet dans le premier exemple de réalisation représenté sur les figures 1 à 4, lesdits éléments de contact mobiles (12a, 12b, 12c, 12d) sont avantageusement liés à un support commun (15) lequel est mobile par rapport à ladite rampe (7). Plus précisément, lesdits éléments de contact mobiles (12a, 12b, 12c, 12d) sont liés audit support commun (15) de manière à ce que leur axe de rotation respectif soit fixe par rapport audit support commun (15) et de manière à ce que la position desdits éléments de contact mobiles (12a, 12b, 12c, 12d) le long dudit axe de rotation respectif soit également fixe par rapport audit support commun (15). Le seul mouvement desdits éléments de contact mobiles (12a, 12b, 12c, 12d) par rapport audit support commun (15) est donc la rotation possible autour de leur axe de rotation respectif. Ledit support commun (15) est pour sa part lié à ladite rampe (7) de manière mobile au moyen de deux axes (16), sensiblement horizontaux, disposés transversalement audit plan vertical médian (27). Lesdits axes (16) sont liés rigidement audit support commun (15) et ils coulissent dans des trous prévus à cet effet dans ladite rampe (7). Lesdits axes (16) sont avantageusement parallèles l'un à l'autre. Ledit support commun (15) peut alors coulisser par rapport à ladite rampe (7) suivant une direction transversale. Lesdits éléments de contact mobiles (12a, 12b, 12c, 12d) restent ainsi au contact dudit montant (13b) malgré d'éventuels défauts de parallélisme entre lesdits montants (13a, 13b). Il est avantageusement prévu des éléments élastiquement déformables (17) disposés entre ledit support commun (15) et ladite rampe (7) de manière à plaquer lesdits éléments de contact (11, 12) contre ledit montant correspondant (13a, 13b). Dans l'exemple de réalisation représenté sur les figures 3 et 4, lesdits éléments élastiquement déformables (17) sont réalisés au moyen de rondelles ressorts glissées sur lesdits axes (16). La déformation desdits éléments (17) permet ainsi de garantir un coulissement optimal de ladite rampe (7) par rapport audit châssis (4).

Le déplacement de ladite rampe (7) par rapport audit châssis (4) suivant une direction sensiblement verticale est occasionné par un organe de manoeuvre (18), par exemple un vérin dont le fût est lié à ladite rampe (7) et la tige est liée audit châssis (4).

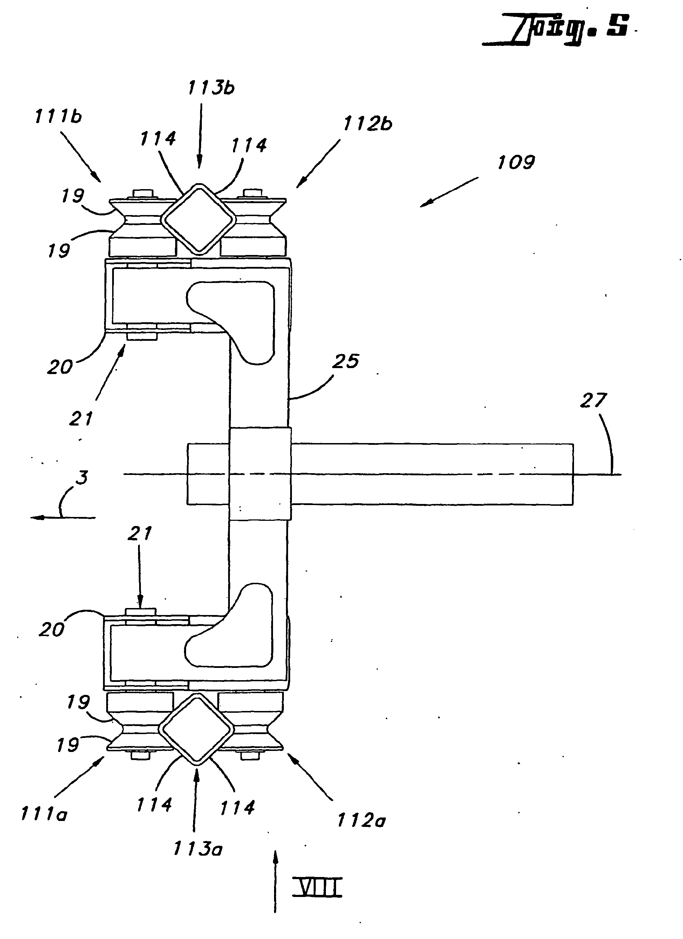

Les figures 5 à 7 représentent un deuxième exemple de réalisation d'un dispositif de guidage conforme à la présente invention. Ce dispositif de guidage (109) comporte un certain nombre d'éléments qui ont été décrits précédemment. Ces éléments garderont par conséquent le même numéro de repère et ne seront pas décrits une nouvelle fois. Il comporte également un certain nombre d'éléments qui sont comparables à des éléments dudit dispositif de guidage (9) décrits précédemment. Ces éléments seront affectés du même numéro de repère que ces éléments comparables dudit dispositif de guidage (9) mais augmentés de 100. Ils ne seront décrits que si cela s'avère nécessaire.

Ainsi dans l'exemple de réalisation représenté sur les figures 5 à 7, ledit dispositif de guidage (109) comporte un guide (110) lié rigidement audit châssis (4) et des éléments de contact (111, 112) liés à ladite rampe (7). Lesdits éléments de contact (111, 112) prennent appui sur ledit guide (110) de manière à guider ladite rampe (7) dans son mouvement de translation.

Dans l'exemple de réalisation représenté sur les figures 5 à 7, ledit guide (110) se compose de deux montants (113a, 113b) dirigés vers le haut comme dans le premier exemple de réalisation. Cependant chaque montant (113a, 113b) présente cette fois quatre faces planes (114) lesquelles sont avantageusement orientées obliquement par rapport audit plan vertical médian (27) dudit pulvérisateur (1). A la lumière de la figure 5, lesdits montants (113a, 113b) ont plus précisément une section carrée laquelle est orientée de manière à ce que l'une de ses diagonales soit sensiblement parallèle audit plan vertical médian (27).

Dans le deuxième exemple de réalisation représenté sur les figures 5 à 7, lesdits éléments de contact (111, 112) sont également des éléments de contact de type roulants. Lesdits éléments de contacts (111 ; 112) sont donc réalisés au moyen de galets liés de manière pivotante à ladite rampe (7). Par contre lesdits galets sont cette fois formés de deux troncs de cône opposés (19) reliés par leur sommet. Les génératrices de chaque tronc de cône (19) sont destinées à prendre appui contre une face plane respective (114) dudit montant correspondant (113a, 113b).

En se référant aux figures 5 à 7, ledit dispositif de guidage (109) comporte quatre éléments de contact fixes (111a, 111b, 111c, 111d). Deux desdits éléments de contact fixes (111a, 111b) sont avantageusement disposés dans une partie supérieure de ladite rampe (7), en avant dudit guide (110) et, par rapport audit plan médian (27), de chaque côté dudit dispositif de guidage (109). Les deux autres éléments de contact fixes (111c, 111d) sont avantageusement disposés dans une partie inférieure de ladite rampe (7), en arrière dudit guide (110) et, par rapport audit plan médian (27), de chaque côté dudit dispositif de guidage (109). Comme le centre de gravite de ladite rampe (7) est située en arrière desdits montants (113a, 113b), une telle disposition permet naturellement de plaquer lesdits éléments de contact fixes (111a, 111b, 111c, 111d) contre lesdits montants respectifs (113a, 113b).

D'une manière préférentielle, les axes de rotation respectifs desdits deux éléments de contact fixes (111a, 111b) sont coaxiaux l'un à l'autre. D'une manière préférentielle, les axes de rotation respectifs desdits deux éléments de contact fixes (111c, 111d) sont également coaxiaux l'un à l'autre. En augmentant la distance séparant les deux éléments de contact fixes (111a, 111b) de la partie supérieure et les deux éléments de contact fixes (111c, 111d) de la partie inférieure, on améliore avantageusement le guidage de ladite rampe (7). Lesdits éléments de contact fixes (111a, 111b, 111c, 111d) sont liés à ladite rampe (7) de manière à ce que leur axe de rotation respectif soit fixe par rapport à ladite rampe (7) et de manière à ce que la position desdits éléments de contact fixes (111a, 111b, 111c, 111d) le long dudit axe de rotation respectif soit également fixe par rapport à ladite rampe (7). Le seul mouvement desdits éléments de contact fixes (111 a, 111b, 111c, 111d) par rapport à ladite rampe (7) est donc la rotation possible autour de leur axe de rotation respectif. Les points de contact desdits élément de contact fixes (111a, 111b, 111c, 111d) sur ledit montant correspondant (113a, 113b) définissent ainsi un appui de référence pour ladite rampe (7).

En se référant aux figures 5 à 7, ledit dispositif de guidage (109) comporte en sus quatre éléments de contact mobiles (112a, 112b, 112c, 112d). Deux desdits éléments de contact mobiles (112a, 112b) sont avantageusement disposés dans une partie supérieure de ladite rampe (7), en arrière dudit guide (110) et, par rapport audit plan médian (27), de chaque côté dudit dispositif de guidage (109). Pour leur part, les deux autres éléments de contact mobiles (112c, 112d) sont disposés dans une partie inférieure de ladite rampe (7), en avant dudit guide (110) et, par rapport audit plan médian (27), de chaque côté dudit dispositif de guidage (109).

Lesdits éléments de contact mobiles (112a, 112b, 112c, 112d) sont liés à ladite rampe (7) de manière à ce que leur emplacement respectif soit mobile par rapport à ladite rampe (7). A cet effet dans le deuxième exemple de réalisation, chaque élément de contact mobile (112a, 112b, 112c, 112d) est lié à un support respectif (20) lequel est lié de manière mobile à ladite rampe (7). Ainsi lesdits éléments de contact mobiles (112a, 112b, 112c, 112d) sont liés audit support respectif (20) de manière à ce que leur axe de rotation respectif soit fixe par rapport audit support correspondant (20) et de manière à ce que la position desdits éléments de contact mobiles (112a, 112b, 112c, 112d) le long dudit axe de rotation respectif soit également fixe par rapport audit support (20). Le seul mouvement desdits éléments de contact mobiles (112a, 112b, 112c, 112d) par rapport audit support respectif (20) est donc la rotation possible autour de leur axe de rotation. Chaque support (20) est pour sa part lié à ladite rampe (7) de manière mobile. En effet, une extrémité de chaque support (20) est liée à ladite rampe (7) au moyen d'une articulation pivot respective (21). L'autre extrémité de chaque support (20) supporte pour sa part ledit élément de contact mobile correspondant (112a, 112b, 112c, 112d). Lesdits supports respectifs (20) peuvent ainsi pivoter par rapport à ladite rampe (7) autour de ladite articulation respective (21) de manière à compenser d'éventuels défauts de parallélisme entre lesdits montants (113a, 113b).

Il est avantageusement prévu des éléments élastiquement déformables (22) disposés entre chaque support respectif (20) et ladite rampe (7) de manière à plaquer encore davantage lesdits éléments de contact (111, 112) contre ledit montant correspondant (113a, 113b). Dans l'exemple de réalisation représenté sur les figures 5 à 7, lesdits éléments élastiquement déformable (22) sont réalisés au moyen de ressorts de traction.

D'une manière avantageuse, l'axe de chaque articulation pivot (21) desdits supports (20) est confondu avec l'axe de rotation d'un élément de contact fixe correspondant ( 111a, 111b, 111c, 111d). De même, les axes de rotation desdits éléments de contact (111, 112) sont de préférence parallèles entre eux.

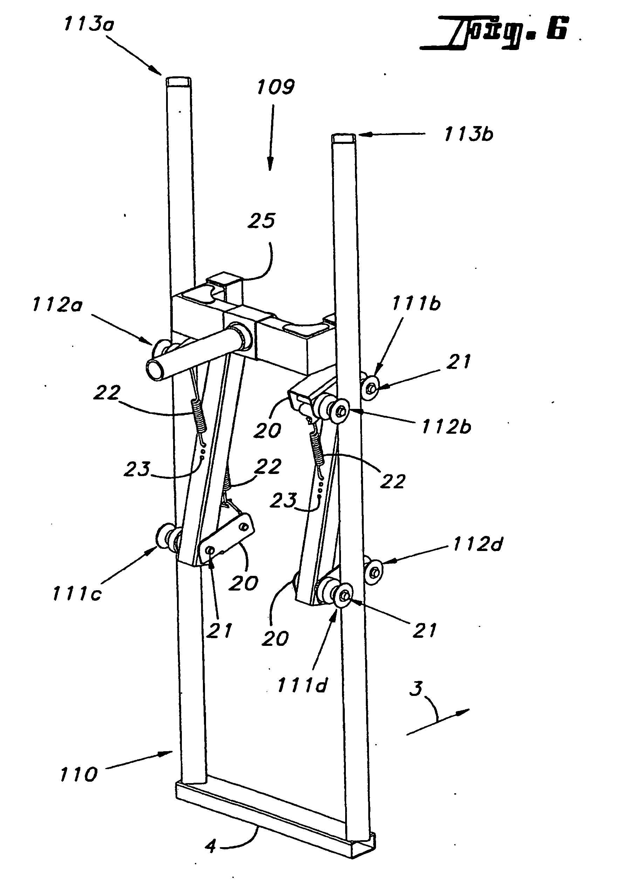

D'une manière également préférentielle, l'effort exercé par lesdits éléments élastiquement déformables (22) peut être réglé par l'utilisateur. A la lumière de la figure 6, l'utilisateur a ainsi le choix entre plusieurs points d'accroche (23) pour lier chaque ressort à ladite rampe (7).

D'une manière préférentielle encore, ladite rampe (7) se compose d'un curseur (25), d'un dispositif de suspension (26) et d'au moins un bras (24). Ledit bras (24) est destiné à supporter lesdits moyens de pulvérisation (8). Ledit dispositif de suspension (26) permet pour sa part de lier ledit bras (24) audit curseur (25) de manière à amortir les efforts transmis l'un à l'autre et de manière à pouvoir orienter angulairement ledit bras (24) par rapport au sol. De tels dispositifs de suspension sont connus de l'homme de l'art, ils ne seront donc pas décrits davantage. Avec une rampe (7) constituée de la sorte, lesdits éléments de contact (11, 12 ; 111, 112) sont alors plus précisément liés audit curseur (25).

Le pulvérisateur agricole (1) qui vient d'être décrit n'est qu'un exemple de réalisation qui ne saurait en aucun cas limiter le domaine de protection défini par les revendications suivantes.

Ainsi selon un autre exemple de réalisation non représenté, ladite rampe (7) est liée de manière coulissante, non pas audit châssis (4), mais à ladite cuve (6) au moyen dudit dispositif de guidage (9 ; 109).

Selon un autre exemple de réalisation non représenté, ledit pulvérisateur (1) est du type traîné. Dans ce cas, ledit châssis (4) est muni de roues au moyen desquelles ledit pulvérisateur (1) repose au moins partiellement sur le sol.

La présente invention concerne également les pulvérisateurs (1) du type automoteur. Ledit châssis (4) supporte alors un moteur et un poste de pilotage.

## Revendications

1. Pulvérisateur agricole comportant :
- un châssis (4),
- une cuve (6) destinée à contenir un produit à pulvériser,
- une rampe (7) destinée à supporter des moyens de pulvérisation (8) pour épandre le produit contenu dans ladite cuve (6), et
- un dispositif de guidage (9 ; 109) destiné à lier de manière coulissante ladite rampe (7) audit châssis (4) ou à ladite cuve (6), ledit dispositif de guidage (9 ; 109) comportant un guide (10 ; 110) et des éléments de contact (11, 12 ; 111, 112), lesdits éléments de contact (11, 12 ; 111, 112) prennent appui sur ledit guide (10 ; 110) de manière à guider ladite rampe (7) dans son mouvement de translation vertical,
***caractérisé par le fait que*** :
- au moins un desdits éléments de contact (11, 12 ; 111, 112) est un élément de contact fixe (11 ; 111) lié à ladite rampe (7) de manière à avoir une position fixe par rapport à ladite rampe (7) permettant de guider avec précision ladite rampe (7) dans son mouvement de translation, au moins un élément de contact fixe (11 ; 111) est disposé dans une partie supérieure de ladite rampe (7) et au moins un élément de contact fixe (11 ; 111) est disposé dans une partie inférieure de ladite rampe (7), et
- au moins un desdits éléments de contact (11, 12 ; 111, 112) est un élément de contact mobile (12 ; 112) lié à ladite rampe (7) de manière à occuper une position variable par rapport à ladite rampe (7) permettant de compenser les différentes tolérances de fabrication dudit guide (10 ; 110), au moins un élément de contact mobile (12 ; 112) est disposé dans une partie supérieure de ladite rampe (7) et au moins un élément de contact mobile (12 ; 112) est disposé dans une partie inférieure de ladite rampe (7).

2. Pulvérisateur selon la revendication 1, ***caractérisé par le fait que*** lesdits éléments de contact (11, 12 ; 111, 112) sont des éléments de contact de type roulant.

3. Pulvérisateur selon la revendication 1 ou 2, ***caractérisé par le fait que*** ledit guide (10 ; 110) se compose de deux montants (13a, 13b; 113a, 113b) sensiblement verticaux et disposés symétriquement de part et d'autre d'un plan vertical médian (27) dudit pulvérisateur agricole (1).

4. Pulvérisateur selon l'une quelconque des revendications 1 à 3, ***caractérisé par le fait que*** ledit dispositif de guidage (9) comporte quatre éléments de contact fixes (11a, 11b, 11c, 11d) lesquels sont disposés, par rapport à un plan vertical médian (27) dudit pulvérisateur agricole (1), sur un même côté dudit dispositif de guidage (9).

5. Pulvérisateur selon l'une quelconque des revendications 1 à 4, ***caractérisé par le fait que*** ledit dispositif de guidage (9) comporte quatre éléments de contact mobiles (12a, 12b, 12c, 12d) lesquels sont disposés, par rapport à un plan vertical médian (27) dudit pulvérisateur agricole (1), sur un même côté dudit dispositif de guidage (9).

6. Pulvérisateur selon la revendication 5 prise en combinaison avec la revendication 4, ***caractérisé par le fait que*** lesdits éléments de contact fixes (11a, 11b, 11c, 11d) sont disposés d'un côté dudit plan vertical médian (27) et lesdits éléments de contact mobiles (12a, 12b, 12c, 12d) sont disposés de l'autre côté dudit plan vertical médian (27).

7. Pulvérisateur selon la revendication 5 ou 6, ***caractérisé par le fait que*** lesdits éléments de contact mobiles (12a, 12b, 12c, 12d) sont liés à un support commun (15) lequel est mobile par rapport à ladite rampe (7).

8. Pulvérisateur selon la revendication 7, ***caractérisé par le fait que*** ledit support commun (15) est lié de manière mobile à ladite rampe (7) au moyen de deux axes (16), sensiblement horizontaux, disposés transversalement audit plan vertical médian (27).

9. Pulvérisateur selon la revendication 7 ou 8, ***caractérisé par** le fait qu*'il est prévu des éléments élastiquement déformable (17) disposés entre ledit support commun (15) et ladite rampe (7) de manière à plaquer lesdits éléments de contact (11, 12) contre ledit guide (10).

10. Pulvérisateur selon l'une quelconque des revendications 1 à 3, ***caractérisé par le fait que*** ledit dispositif de guidage (109) comporte quatre éléments de contact fixes (111a, 111b, 111c, 111d) dont deux éléments de contact fixes (111 a, 111b) sont avantageusement disposés dans une partie supérieure de ladite rampe (7), en avant dudit guide (110) et, par rapport à un plan vertical médian (27) dudit pulvérisateur agricole (1), de chaque côté dudit dispositif de guidage (109), et dont les deux autres éléments de contact fixes (111c, 111 d) sont disposés dans une partie inférieure de ladite rampe (7), en arrière dudit guide (110) et, par rapport audit plan médian (27), de chaque côté dudit dispositif de guidage (109).

11. Pulvérisateur selon l'une quelconque des revendications 1 à 3 ou selon la revendication 10, ***caractérisé par le fait que*** ledit dispositif de guidage (109) comporte quatre éléments de contact mobiles (112a, 112b, 112c, 112d) dont deux desdits éléments de contact mobiles (112a, 112b) sont disposés dans une partie supérieure de ladite rampe (7), en arrière dudit guide (110) et, par rapport à un plan vertical médian (27) dudit pulvérisateur agricole (1), de chaque côté dudit dispositif de guidage (109), et dont les deux autres éléments de contact mobiles (112c, 112d) sont disposés dans une partie inférieure de ladite rampe (7), en avant dudit guide (110) et, par rapport audit plan médian (27), de chaque côté dudit dispositif de guidage (109).

12. Pulvérisateur selon la revendication 11, ***caractérisé par le fait que*** chaque élément de contact mobile (112a, 112b, 112c, 112d) est lié à un support respectif (20) lequel est lié de manière mobile à ladite rampe (7).

13. Pulvérisateur selon la revendication 12, ***caractérisé par** le fait qu*'une extrémité de chaque support (20) est liée à ladite rampe (7) au moyen d'une articulation pivot respective (21), l'autre extrémité de chaque support (20) supporte pour sa part ledit élément de contact mobile correspondant (112a, 112b, 112c, 112d).

14. Pulvérisateur selon l'une quelconque des revendications 11 à 13 prise en combinaison avec la revendication 10, ***caractérisé par le fait que*** l'axe de chaque articulation pivot (21) desdits supports (20) est confondu avec un axe de rotation d'un élément de contact fixe correspondant (111a, 111b, 111c, 111d)

15. Pulvérisateur selon l'une quelconque des revendications 12 à 14, ***caractérisé par** le fait qu*'il est prévu des éléments élastiquement déformables (22) disposés entre chaque support (20) et ladite rampe (7).

## Claims

1. Agricultural sprayer comprising:
- a chassis (4),
- a tank (6) intended to contain a product that is to be sprayed,
- a spray boom (7) intended to support spray means (8) for spreading the product contained in the said tank (6), and
- a guidance device (9; 109) intended to connect the said spray boom (7) slidably to the said chassis (4) or to the said tank (6), the said guidance device (9; 109) comprising a guide (10; 110) and contact elements (11, 12; 111, 112), the said contact elements (11, 12; 111, 112) resting against the said guide (10; 110) so as to guide the said spray boom (7) in its vertical translational movement,
***characterized in* that**:
- at least one of the said contact elements (11, 12; 111, 112) is a fixed contact element (11; 111) connected to the said spray boom (7) in such a way as to have a fixed position with respect to the said spray boom (7) allowing the said spray boom (7) to be guided accurately in its translational movement, at least one fixed contact element (11; 111) is positioned in an upper part of the said spray boom (7) and at least one fixed contact element (11; 111) is positioned in a lower part of the said spray boom (7), and
- at least one of the said contact elements (11, 12; 111, 112) is a mobile contact element (12; 112) connected to the said spray boom (7) in such a way as to occupy a position that can be varied with respect to the said spray boom (7) making it possible to compensate for the various manufacturing tolerances on the said guide (10; 110), at least one mobile contact element (12; 112) is positioned in an upper part of the said spray boom (7) and at least one mobile contact element (12; 112) is positioned in a lower part of the said spray boom (7).

2. Sprayer according to Claim 1, ***characterized in* that** the said contact elements (11, 12; 111, 112) are contact elements of the rolling type.

3. Sprayer according to Claim 1 or 2, ***characterized in* that** the said guide (10; 110) is made up of two substantially vertical uprights (13a, 13b; 113a, 113b) positioned symmetrically on each side of a vertical mid-plane (27) of the said agricultural sprayer (1).

4. Sprayer according to any one of Claims 1 to 3, ***characterized in* that** the said guidance device (9) comprises four fixed contact elements (11a, 11b, 11c, 11d) which are positioned, with respect to a vertical mid-plane (27) of the said agricultural sprayer (1), on one and the same side of the said guidance device (9).

5. Sprayer according to any one of Claims 1 to 4, ***characterized in* that** the said guidance device (9) comprises four mobile contact elements (12a, 12b, 12c, 12d) which are positioned, with respect to a vertical mid-plane (27) of the said agricultural sprayer (1), on one and the same side of the said guidance device (9).

6. Sprayer according to Claim 5 taken in combination with Claim 4, ***characterized in* that** the said fixed contact elements (11a, 11b, 11c, 11d) are positioned on one side of the said vertical mid-plane (27) and the said mobile contact elements (12a, 12b, 12c, 12d) are positioned on the other side of the said vertical mid-plane (27).

7. Sprayer according to Claim 5 or 6, ***characterized in* that** the said mobile contact elements (12a, 12b, 12c, 12d) are connected to a common support (15) which is able to move with respect to the said spray boom (7).

8. Sprayer according to Claim 7, ***characterized in* that** the said common support (15) is connected movably to the said spray boom (7) by means of two substantially horizontal axes (16) positioned transversely to the said vertical mid-plane (27).

9. Sprayer according to Claim 7 or 8, ***characterized in* that** it is provided with elastically deformable elements (17) positioned between the said common support (15) and the said spray boom (7) so as to press the said contact elements (11, 12) firmly against the said guide (10).

10. Sprayer according to any one of Claims 1 to 3, ***characterized in* that** the said guidance device (109) comprises four fixed contact elements (111a, 111b, 111c, 111d) of which two fixed contact elements (111a, 111b) are advantageously positioned in an upper part of the said spray boom (7), forward of the said guide (110) and, with respect to a vertical mid-plane (27) of the said agricultural sprayer (1), on each side of the said guidance device (109), and of which the other two fixed contact elements (111c, 111d) are positioned in a lower part of the said spray boom (7), to the rear of the said guide (110) and, with respect to the said mid-plane (27), on each side of the said guidance device (109).

11. Sprayer according to any one of Claims 1 to 3 or according to Claim 10, ***characterized in* that** the said guidance device (109) comprises four mobile contact elements (112a, 112b, 112c, 112d) of which two of the said mobile contact elements (112a, 112b) are positioned in an upper part of the said spray boom (7), to the rear of the said guide (110) and, with respect to a vertical mid-plane (27) of the said agricultural sprayer (1), on each side of the said guidance device (109), and of which the other two mobile contact elements (112c, 112d) are positioned in a lower part of the said spray boom (7), forward of the said guide (110) and, with respect to the said mid-plane (27), on each side of the said guidance device (109).

12. Sprayer according to Claim 11, ***characterized in* that** each mobile contact element (112a, 112b, 112c, 112d) is connected to a respective support (20) which is movably connected to the said spray boom (7).

13. Sprayer according to Claim 12, ***characterized in* that** one end of each support (20) is connected to the said spray boom (7) by means of a respective pivot (21), the other end of each support (20) itself supporting the said corresponding mobile contact element (112a, 112b, 112c, 112d).

14. Sprayer according to any one of Claims 11 to 13 taken in combination with Claim 10, ***characterized in* that** the axis of each pivot (21) of the said supports (20) coincides with an axis of rotation of a corresponding fixed contact element (111a, 11b, 11c, 111d).

15. Sprayer according to any one of Claims 12 to 14, ***characterized in* that** elastically deformable elements (22) are provided, these being positioned between each support (20) and the said spray boom (7).

## Patentansprüche

1. Landwirtschaftliche Feldspritze mit:
- einem Gestell (4),
- einer Wanne (6), die dazu bestimmt ist, ein aufzuspritzendes Produkt zu enthalten,
- einem Spritzgestänge (7), das dazu bestimmt ist, Spritzmittel (8) zu tragen, zum das in der Wanne (6) enthaltene Produkt aufzuspritzen, und
- einer Führungsvorrichtung (9; 109), die dazu bestimmt ist, das Spritzgestänge (7) gleitend mit dem Gestell (4) oder der Wanne (6) zu verbinden, wobei die Führungsvorrichtung (9; 109) eine Führung (10; 110) und Kontaktelemente (11, 12; 111, 112) umfasst, wobei die Kontaktelemente (11, 12; 111, 112) sich auf der Führung (10; 110) abstützen, um das Spritzgestänge (7) bei seiner vertikalen Translationsbewegung zu führen
***dadurch gekennzeichnet,* dass**:
- mindestens eines der Kontaktelemente (11, 12; 111, 112) ein festes Kontaktelement (11; 111) ist, das mit dem Spritzgestänge (7) derart verbunden ist, dass es eine feste Position in Bezug zum Spritzgestänge (7) hat, wodurch es möglich ist, das Spritzgestänge (7) bei seiner Translationsbewegung genau zu führen, mindestens ein festes Kontaktelement (11; 111) an einem oberen Teil des Spritzgestänges (7) und mindestens ein festes Kontaktelement (11; 111) an einem unteren Teil des Spritzgestänges der Rampe (7) angeordnet ist, und
- mindestens eines der Kontaktelemente (11, 12; 111, 112) ein bewegliches Kontaktelement (12; 112) ist, das mit dem Spritzgestänge (7) derart verbunden ist, dass es eine variable Position in Bezug zum Spritzgestänge (7) einnimmt, wodurch es möglich ist, die verschiedenen Herstellungstoleranzen der Führung (10; 110) auszugleichen, mindestens ein bewegliches Kontaktelement (12; 112) an einem oberen Teil des Spritzgestänges (7) und mindestens ein bewegliches Kontaktelement (12; 112) an einem unteren Teil des Spritzgestänges (7) angeordnet ist.

2. Feldspritze nach Anspruch 1, ***dadurch gekennzeichnet,* dass** die Kontaktelemente (11, 12; 111, 112) Kontaktelemente rollenden Typs sind.

3. Feldspritze nach Anspruch 1 oder 2, ***dadurch gekennzeichnet,* dass** die Führung (10; 110) aus zwei im Wesentlichen vertikalen Ständern (13a, 13b; 113a, 113b) besteht, die symmetrisch beiderseits einer mittleren Vertikalebene (27) der landwirtschaftlichen Feldspritze (1) angeordnet sind.

4. Feldspritze nach irgend einem der Ansprüche 1 bis 3, ***dadurch gekennzeichnet,* dass** die Führungsvorrichtung (9) vier feste Kontaktelemente (11a, 11b, 11c, 11d) umfasst, die in Bezug zu einer mittleren Vertikalebene (27) der landwirtschaftlichen Feldspritze (1) auf einer selben Seite der Führungsvorrichtung (9) angeordnet sind.

5. Feldspritze nach irgend einem der Ansprüche 1 bis 4, ***dadurch gekennzeichnet,* dass** die Führungsvorrichtung (9) vier bewegliche Kontaktelemente (12a, 12b, 12c, 12d) umfasst, die in Bezug zu einer mittleren Vertikalebene (27) der landwirtschaftlichen Feldspritze (1) auf einer selben Seite der Führungsvorrichtung (9) angeordnet sind.

6. Feldspritze nach Anspruch 5 in Kombination mit Anspruch 4, ***dadurch gekennzeichnet,* dass** die festen Kontaktelemente (11a, 11b, 11c, 11d) auf einer Seite der mittleren Vertikalebene (27) und die beweglichen Kontaktelemente (12a, 12b, 12c, 12d) auf der anderen Seite der mittleren Vertikalebene (27) angeordnet sind.

7. Feldspritze nach Anspruch 5 oder 6, ***dadurch gekennzeichnet,* dass** die beweglichen Kontaktelemente (12a, 12b, 12c, 12d) mit einer gemeinsamen Stütze (15) verbunden sind, die in Bezug zum Spritzgestänge (7) beweglich ist.

8. Feldspritze nach Anspruch 7, ***dadurch gekennzeichnet,* dass** die gemeinsamen Stütze (15) beweglich mit dem Spritzgestänge (7) mittels zwei im Wesentlichen horizontalen Achsen (16) verbunden ist, die quer zur mittleren Vertikalebene (27) angeordnet sind.

9. Feldspritze nach Anspruch 7 oder 8, ***dadurch gekennzeichnet,* dass** elastisch verformbare Elemente (17) vorgesehen sind, die zwischen der gemeinsamen Stütze (15) und dem Spritzgestänge (7) angeordnet sind, um die Kontaktelemente (11, 12) an die Führung (10) zu drücken.

10. Feldspritze nach irgend einem der Ansprüche 1 bis 3, ***dadurch gekennzeichnet,* dass** die Führungsvorrichtung (109) vier feste Kontaktelemente (111a, 111b, 111c, 111d) umfasst, von welchen zwei feste Kontaktelemente (111a, 111b) vorzugsweise an einem oberen Teil des Spritzgestänges (7) vor der Führung (110) und in Bezug zu einer mittleren Vertikalebene (27) der landwirtschaftlichen Feldspritze (1) auf jeder Seite der Führungsvorrichtung (109) angeordnet sind, und von welchen die beiden anderen festen Kontaktelemente (111c, 111d) an einem unteren Teil des Spritzgestänges (7) hinter der Führung (110) und in Bezug zur mittleren Vertikalebene (27) auf jeder Seite der Führungsvorrichtung (109) angeordnet sind.

11. Feldspritze nach irgend einem der Ansprüche 1 bis 3 oder nach Anspruch 10, ***dadurch gekennzeichnet,* dass** die Führungsvorrichtung (109) vier bewegliche Kontaktelemente (112a, 112b, 112c, 112d) umfasst, von welchen zwei der beweglichen Kontaktelemente (112a, 112b) an einem oberen Teil des Spritzgestänges (7) hinter der Führung (110) und in Bezug zu einer mittleren Vertikalebene (27) der landwirtschaftlichen Feldspritze (1) auf jeder Seite der Führungsvorrichtung (109) angeordnet sind, und von welchen die anderen zwei beweglichen Kontaktelemente (112c, 112d) an einem unteren Teil des Spritzgestänges (7) vor der Führung (110) und in Bezug zur Mittelebene (27) auf jeder Seite der Führungsvorrichtung (109) angeordnet sind.

12. Feldspritze nach Anspruch 11, ***dadurch gekennzeichnet,* dass** jedes bewegliche Kontaktelement (112a, 112b, 112c, 112d) mit einer jeweiligen Stütze (20) verbunden ist, die beweglich mit dem Spritzgestänge (7) verbunden ist.

13. Feldspritze nach Anspruch 12, ***dadurch gekennzeichnet,* dass** ein Ende jeder Stütze (20) mit dem Spritzgestänge (7) mittels eines jeweiligen Drehgelenks (21) verbunden ist, wobei das andere Ende jeder Stütze (20) seinerseits das entsprechende bewegliche Kontaktelement (112a, 112b, 112c, 112d) trägt.

14. Feldspritze nach irgend einem der Ansprüche 11 bis 13 in Kombination mit Anspruch 10, ***dadurch gekennzeichnet,* dass** die Achse jedes Drehgelenks (21) der Stützen (20) mit einer Drehachse eines entsprechenden festen Kontaktelements (111a, 111b, 111c, 111d) zusammenfällt.

15. Feldspritze nach irgend einem der Ansprüche 12 bis 14, ***dadurch gekennzeichnet,* dass** elastisch verformbare Elemente (22) vorgesehen sind, die zwischen jeder Stütze (20) und dem Spritzgestänge (7) angeordnet sind.
